# EUROPEAN PATENT SPECIFICATION

(11) **EP 1 167 850 B1**
(45) Date of publication and mention of the grant of the patent: **28.07.2004**
(21) Application number: 01112030.0
(22) Date of filing: 23.05.2001
(51) Int. Cl.: F16L 3/12, F16L 3/123

(54) **Fixing clamp, particularly for corrugated hoses and the like**
Befestigungsklammer, insbesondere für Wellrohre und dergleichen
Pince de fixation, en particulier pour tuyaux ondulés et similaires

(30) Priority: 29.05.2000 IT MI000332 U
(43) Date of publication of application: 02.01.2002
(73) Proprietor: Pellizzari, Antonella, 20154 Milano (IT)
(72) Inventor: Pellizzari, Antonella, 20154 Milano (IT)
(74) Representative: Modiano, Guido, Dr.-Ing.

(56) References cited:
- GB-A- 2 142 376
- NL-C- 1 007 270
- US-A- 4 564 163
- US-A- 5 762 299

## Description

The present invention relates to a fixing clamp particularly for corrugated hoses and the like.

It is known that fixing clamps are used to fix corrugated hoses, cables and the like, for example in the automotive field, and allow to lock the corrugated hose or cable.

Two kinds of fixing clamp are currently used: a first kind requires, in order to fix the clamp to a surface along which the corrugated hose or cable is to be arranged, the engagement of the clamp with a welded pin which is substantially T-shaped and protrudes at right angles to the surface onto which the fixing clamp is to be applied.

The above-described solution entails engaging the clamp on the welded pin and then taping the corrugated hose or cable on the supporting surface provided in the clamp, which is accordingly rigidly coupled to the surface along which the corrugated hose or cable is to be arranged; at the same time, the clamp keeps the corrugated hose or cable fixed by means of the taping.

However, although the above-described solution is effective from the point of view of fixing the clamp to the surface, since it is not necessary to provide holes and engagement is performed exclusively on a welded pin which protrudes from the surface, thus ensuring the hermetic tightness of the surface, the taping by means of which the corrugated hose or cable is fixed to the appropriately provided clamp resting surface does not ensure the durability of the connection.

For example for corrugated hoses or cables which are fixed at surfaces which are exposed to atmospheric agents, such as for example under the hood of a car, particularly at the windshield wiper region, such atmospheric agents in fact considerably reduce the durability of fixing performed by taping.

Substantially, the tape tends to wear over time and therefore no longer ensures the intended fixing of the corrugated hose or cable to the fixing clamp.

A second solution of a fixing clamp is provided by a clamp with openable jaws, which is provided with a sort of pin which is engaged in an appropriately provided hole formed beforehand in the surface to which the fixing clamp is to be connected.

However, also this solution is not free from drawbacks: although the cable is fixed to the clamp without the aid of taping but merely by inserting the cable in the jaws of the clamp, the clamp has to be fixed to the surface of interest by forming a hole in the surface in order to be able to insert therein the pin that is an integral part of the fixing clamp.

The need to provide holes for engaging the clamps clashes with the need to keep particular regions of the car absolutely hermetic, for example if the clamp is used to fix corrugated hoses or cables in cars.

Accordingly, it is evident that the current conventional solutions do not allow to engage the clamp without forming holes in the surface to which the clamp is to be engaged and most of all without having to resort to taping the cable in order to fix it to the clamp.

NL-A-1007 270 discloses a clamp with two semiannular elements, the clamp having a body that must be screwed or bolted to a resting surface.

The aim of the present invention is to provide a clamp particularly for fixing corrugated hoses and the like which can be applied to a surface without providing holes therein and at the same time allows to fix the corrugated hose or cable without the aid of taping.

Within this aim, an object of the present invention is to provide a clamp for fixing corrugated hoses and the like whose fixing to a surface allows to ensure the hermetic tightness of the surface because of the lack of holes for fixing the clamp.

Another object of the present invention is to provide a clamp for fixing corrugated hoses and the like which is cheap and easy to manufacture.

This aim and these and other objects which will become better apparent hereinafter are achieved by a clamp as defined in claim 1.

Further characteristics and advantages of the invention will become better apparent from the description of a clamp according to the invention, illustrated only by way of example in the accompanying drawings, wherein:
Figure 1 is a perspective view of a pair of clamps according to the present invention, engaged to a surface;
Figure 2 is a detailed perspective view of the clamp according to the present invention in the open configuration; and
Figure 3 is a perspective view, similar to Figure 1, of the fixing of a corrugated hose by means of a plurality of clamps according to the present invention.

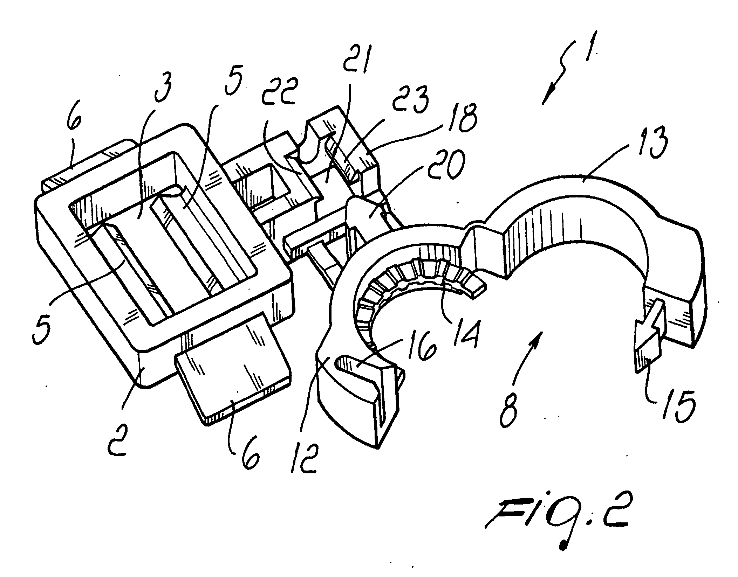

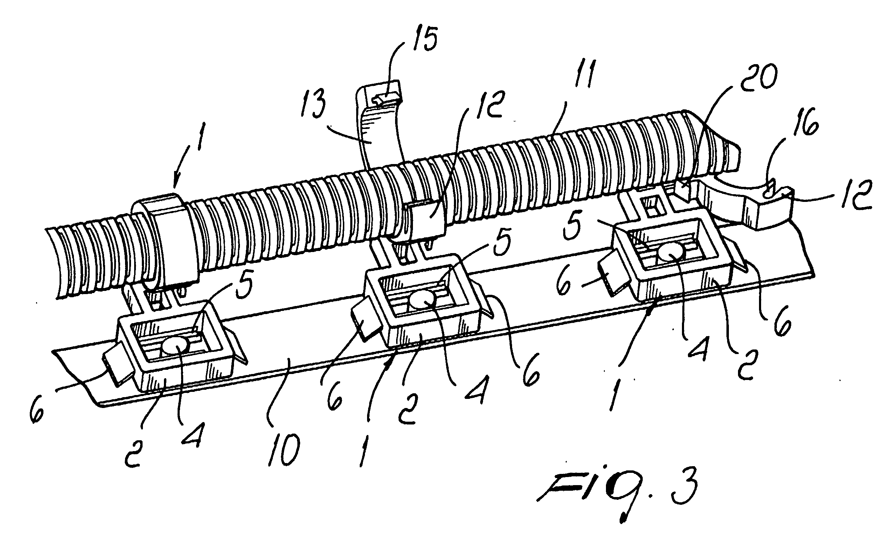

With reference to the figures, in which identical reference numerals designate identical elements, the clamp according to the invention, generally designated by the reference numeral 1, comprises a base body 2 which is shaped substantially like a parallelepiped and is internally provided with an opening 3 which allows engagement with a substantially T-shaped pin which is designated by the reference numeral 4 in Figures 2 and 3 and is welded to the surface to which the clamp according to the invention is to be applied.

The opening 3 is delimited by inclined wings 5 which allow abutment against the head of the pin 4 so as to retain the parallelepipedal body 2, thus keeping it in close contact with the surface from which the T-shaped pin 4 protrudes.

Conveniently, the parallelepipedal body 2 is provided with two lateral stabilizing wings 6 which are arranged at an angle and are adapted to abut against the resting surface onto which the clamp is fixed. In Figures 2 and 3, such surface is shown partially and is designated by the reference numeral 10.

The clamp according to the invention comprises, in addition to the parallelepipedal body 2, means for fixing and retaining a corrugated hose, cable or the like 11.

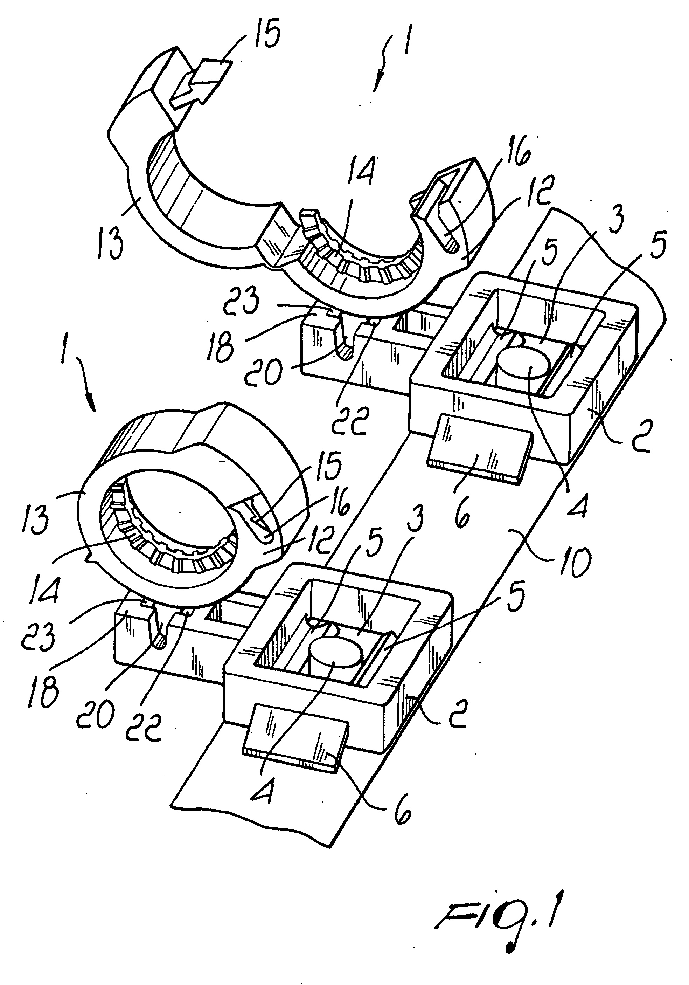

In detail, the fixing and retention means protrude from the parallelepipedal body 2, are generally designated by the reference numeral 8 and are adapted to pass from an open position, as shown in Figure 2, to a closed position, as shown in Figure 3 and in Figure 1, by turning through 90° about an axis which is substantially parallel to the surface 10 to which the clamp according to the invention is fixed.

In detail, the fixing and retention means 8 comprise two semiannular elements 12 and 13 which are mutually hinged so as to allow, upon closure, to form a ring and allow, when open, to insert a corrugated hose or cable 11.

One of the two semiannular elements, particularly and preferably the semiannular element 12 that remains fixed with respect to the semiannular element 13 that is pivoted thereto, internally has a semicircular profile 14 which allows to produce interference with the corrugated hose 11.

The second semiannular element 13 is further provided with engagement means 15 which allow the locking closure of the second semiannular element 13 onto the first semiannular element 12, which is complementarily provided with an engagement seat 16 adapted to accommodate the engagement and locking means 15, which are conveniently constituted, for example, by an arrowhead-shaped tooth.

The fixing and retention means 8 are hinged to a portion 18 which protrudes from the parallelepipedal body 2 and can rotate with respect to said portion through 90°, so as to pass from a condition in which they lie substantially on a plane which is parallel to the plane on which the parallelepipedal body 2 is arranged to a plane which is substantially perpendicular to the previously formed plane, so that the first semiannular element 12 engages the protruding element 18 by way of second engagement and locking means 20 which are constituted by an arrow-shaped pin which engages a cavity 21 formed in the protruding element 18 and is retained therein by two lateral inclined wings 22 and 23 which engage the step-like portions of the engagement and locking means.

Substantially, as shown in Figures 1 and 3, the clamp according to the invention can be arranged initially so that the semiannular elements 12 and 13 lie on a plane which is substantially parallel to the plane of the surface 10 to which the parallelepipedal body 2 engages, so as to be able to conveniently arrange the corrugated hose 11. At this point the semiannular elements 12 and 13 are overturned about the point where they are pivoted to the protruding element 18, so as to move them into a position which lies on a plane which is perpendicular to the previously defined plane. It is also possible to provide the semiannular elements 12 and 13 directly in the vertical position by molding.

At this point, as shown by the central fixing clamp of Figure 3, it is possible to close the second semiannular element 13 onto the first semiannular element 12, engaging the locking tooth 15 in the corresponding seat, so as to fasten the semiannular element 13 around the corrugated hose 11 so as to lock it firmly.

In this manner, the fixing of the box-like body 2 to the surface 10 does not entail the need to provide a hole, and at the same time the corrugated hose is not locked within the jaws formed by the first and second semiannular elements 12 and 13 by using any kind of taping.

To conclude, the clamp according to the invention allows both to ensure the hermetic tightness of the surface to which it is applied and to ensure optimum locking of the corrugated hose or cable retained thereby, since thanks to the lack of fixing tape atmospheric agents have substantially no effect on the type of locking provided in order to retain the corrugated hose or the like.

In practice it has been observed that the clamp according to the invention fully achieves the intended aim and objects, since it allows to meet the requirements of hermetic tightness of the surface to which it is applied and to ensure the durability of the locking of the hose for which it is provided.

A further embodiment of the clamp according to the invention entails producing the clamp in two separate parts, namely the parallelepipedal body 2 and the pair of semiannular elements 12 and 13; the two separate parts are then mutually assembled in a subsequent assembly step.

A still further embodiment of the clamp according to the invention entails producing the molded clamp monolithically, but so that the parallelepipedal body 2 and the pair of semiannular elements 12 and 13 are joined to each other already at right angles to each other, i.e., so that the semiannular elements are at right angles to the parallelepipedal body 2.

Another embodiment entails providing the semiannular element 12 by molding it directly monolithically with the parallelepipedal body 2, thus allowing to eliminate the second engagement and locking means 18 as well as the engagement tooth 20 which is rigidly coupled to the semiannular element 12.

In this case, the end of the semiannular element 12 that lies opposite the end for connection to the semiannular element 13 is in fact connected directly and monolithically to the parallelepipedal element 2.

In practice, the materials employed, so long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A clamp (1) for fixing corrugated hoses (11) comprising a body (2) which is shaped like a parallelepiped and is adapted to be engaged to a surface (10), and means (8) for retaining and locking at least one corrugated hose, said means being constituted by a first semiannular element (12) and a second semiannular element (13) which are hinged to each other, said first semiannular element (12) being in turn connected to said parallelepipedal body (2), said second semiannular element (13) being movable so as to open and close with respect to said first semiannular element (12) in order to accommodate and retain said corrugated hose (11), **characterized in that** said body (2) is adapted to engage a pin (4) which protrudes from said surface (10), said parallelepipedal body (2) being internally provided with a cavity (3) for engaging said pin (4) which protrudes from said surface (10), two wings (5) being arranged so as to be inclined upward in order to retain said parallelepipedal body (2) aground the head of said pin (4).

2. The clamp according to claim 1, **characterized in that** said first semiannular element (12) is hinged to a portion (18) which protrudes from said parallelepipedal body, in order to pass from a position in which said first semiannular element lies on a plane which is substantially parallel to the surface of said parallelepipedal body (2) to a plane which is substantially perpendicular to said surface.

3. The clamp according to claim 2, **characterized in that** said first semiannular element (12) is provided with engagement means (20) which protrude from it and are adapted to engage a seat (21) formed in said protruding portion (18) of said parallelepipedal body (2).

4. The clamp according to one or more of the preceding claims, **characterized in that** said first semiannular element (12) is internally provided with a protruding profile which is adapted to produce interference with said corrugated hose (11) when said second semiannular element (13) is closed onto said first semiannular element (12).

5. The clamp according to one or more of the preceding claims, **characterized in that** said first semiannular element (12) has, at one end, an engagement seat (16) for engagement means (15) which protrude from said second semiannular element (13).

6. The clamp according to one or more of the preceding claims, **characterized in that** said engagement means (15) that protrude from said first semiannular element (13) are arrowhead-shaped, said seat formed in said protruding portion (18) of said parallelepipedal body being provided with inclined wings (22, 23) for retaining said engagement means (20) of said first semiannular element (12).

7. The clamp according to one or more of the preceding claims, **characterized in that** said parallelepipedal body (2) is externally provided with two mutually opposite wings (6)which are angled downward and are adapted to abut against said surface (10) in order to stabilize the resting of said parallelepipedal body (2).

## Patentansprüche

1. Klemme (1) zum Fixieren von Wellschläuchen (11), die einen Körper (2), der wie ein Parallelepiped geformt und so eingerichtet ist, dass er mit einer Fläche (10) in Eingriff gebracht wird, sowie eine Einrichtung (8) zum Halten und Arretieren wenigstens eines Wellschlauchs umfasst, wobei die Einrichtung durch ein erstes Halb-Ringelement (12) und ein zweites Halb-Ringelement (13) gebildet wird, die gelenkig miteinander verbunden sind, und das erste Halb-Ringelement (12) seinerseits mit dem parallalepipedförmigen Körper (2) verbunden ist und das zweite Halb-Ringelement (13) so bewegt werden kann, dass es sich in Bezug auf das erste Halb-Ringelement (12) öffnet und schließt, um den Wellschlauch (11) aufzunehmen und zu halten, **dadurch gekennzeichnet, dass** der Körper (2) so eingerichtet ist, dass er mit einem Zapfen (4) in Eingriff kommt, der von der Fläche (10) vorsteht, und der parallelepipedförmige Körper (2) innen mit einem Hohlraum (3) zum Eingriff mit dem Zapfen (4) versehen ist, der von der Fläche (10) vorsteht, wobei zwei Flügel (5) so angeordnet sind, dass sie nach oben geneigt sind, um den parallelepipedförmigen Körper (2) um den Kopf des Zapfens (4) herum zu halten.

2. Klemme nach Anspruch 1, **dadurch gekennzeichnet, dass** das erste Halb-Ringelement (12) an einem Abschnitt (18) gelenkig angebracht ist, der von dem parallelepipedförmigen Körper vorsteht, um von einer Position, in der das erstes Halb-Ringelement in einer Ebene liegt, die im Wesentlichen parallel zu der Fläche des parallelepipedförmigen Körpers (2) ist, in eine Ebene überzugehen, die im Wesentlichen senkrecht zu der Fläche ist.

3. Klemme nach Anspruch 2, **dadurch gekennzeichnet, dass** das erste Halb-Ringelement (12) mit einer Eingriffseinrichtung (20) versehen ist, die davon vorsteht und die so eingerichtet ist, dass sie mit einer Aufnahme (21) in Eingriff kommt, die in dem vorstehenden Abschnitt (18) des parallelepipedförmigen Körpers (2) ausgebildet ist.

4. Klemme nach einem oder mehreren der vorangehenden Ansprüche, **dadurch gekennzeichnet, dass** das erste Halb-Ringelement (12) innen mit einem vorstehenden Profil versehen ist, das so eingerichtet ist, dass es zu Presspassung mit dem Wellschlauch (11) kommt, wenn das zweite Halb-Ringelement (13) auf das erste Halb-Ringelement (12) geschlossen wird.

5. Klemme nach einem oder mehreren der vorangehenden Ansprüche, **dadurch gekennzeichnet, dass** das erste Halb-Ringelement (12) an einem Ende eine Eingriffsaufnahme (16) für eine Eingriffseinrichtung (15) hat, die von dem zweiten Halb-Ringelement (13) vorsteht.

6. Klemme nach einem oder mehreren der vorangehenden Ansprüche, **dadurch gekennzeichnet, dass** die Eingriffseinrichtung (15), die von dem ersten Halb-Ringelement (13) vorsteht, pfeilspitzenförmig ist, wobei die Aufnahme, die in dem vorspringenden Abschnitt (18) des parallelepipedförmigen Körpers ausgebildet ist, mit geneigten Flügeln (22, 23) zum Halten der Eingriffseinrichtung (20) des ersten Halb-Ringelementes (12) versehen ist.

7. Klemme nach einem oder mehreren der vorangehenden Ansprüche, **dadurch gekennzeichnet, dass** der parallelepipedförmige Körper (2) außen mit zwei einander gegenüberliegenden Flügeln (6) versehen ist, die nach unten abgewinkelt sind und die so eingerichtet sind, dass sie an der Fläche (10) anliegen, um das Aufsitzen des parallelepipedförmigen Körpers (2) zu stabilisieren.

## Revendications

1. Pince (1) pour fixer des tuyaux ondulés (11), comprenant un corps (2) qui a la forme d'un parallélépipède, et qui est adapté pour venir en prise avec une surface (10), et des moyens (8) pour maintenir et verrouiller au moins un tuyau ondulé, lesdits moyens étant constitués par un premier élément semi-annulaire (12) et un deuxième élément semi-annulaire (13) qui sont articulés l'un par rapport à l'autre, ledit premier élément semi-annulaire (12) étant lui-même raccordé audit corps parallélépipédique (2), ledit deuxième élément semi-annulaire (13) étant mobile de façon à s'ouvrir et à se fermer par rapport audit premier élément semi-annulaire (12) de façon à recevoir et à maintenir ledit tuyau ondulé (11), **caractérisée en ce que** ledit corps (2) est adapté pour venir en prise avec une broche (4) qui fait saillie à partir de ladite surface (10), ledit corps parallélépipédique (2) étant muni intérieurement d'une cavité (3) pour venir en prise avec ladite broche (4) qui fait saillie à partir de ladite surface (10), deux ailes (5) étant agencées de façon à être inclinées vers le haut afin de maintenir ledit corps parallélépipédique (2) autour de la tête de ladite broche (4).

2. Pince selon la revendication 1, **caractérisée en ce que** ledit premier élément semi-annulaire (12) est articulé sur une partie (18) qui fait saillie à partir dudit corps parallélépipédique, de façon à passer d'une position dans laquelle ledit premier élément semi-annulaire se trouve sur un plan qui est sensiblement parallèle à la surface dudit corps parallélépipédique (2) à un plan qui est sensiblement perpendiculaire à ladite surface.

3. Pince selon la revendication 2, **caractérisée en ce que** ledit premier élément semi-annulaire (12) est muni de moyens de prise (20) qui font saillie à partir de celui-ci et qui sont adaptés pour venir en prise avec un siège (21) formé dans ladite partie saillante (18) dudit corps parallélépipédique (2).

4. Pince selon l'une ou plusieurs des revendications précédentes, **caractérisée en ce que** ledit premier élément semi-annulaire (12) est intérieurement muni d'un profil saillant qui est adapté pour produire une interférence avec ledit tuyau ondulé (11) lorsque ledit deuxième élément semi-annulaire (13) est fermé sur ledit premier élément semi-annulaire (12).

5. Pince selon l'une ou plusieurs des revendications précédentes, **caractérisée en ce que** ledit premier élément semi-annulaire (12), comporte, à une extrémité, un siège de prise (16) pour des moyens de prise (15) qui font saillie à partir dudit deuxième élément semi-annulaire (13).

6. Pince selon l'une ou plusieurs des revendications précédentes, **caractérisée en ce que** lesdits moyens de prise (15) qui font saillie à partir dudit premier élément semi-annulaire (13) sont en forme de pointe de flèche, ledit siège formé dans ladite partie saillante (18) dudit corps parallélépipédique étant muni d'ailes inclinées (22, 23) pour maintenir lesdits moyens de prise (20)· dudit premier élément semi-annulaire (12).

7. Pince selon l'une ou plusieurs des revendications précédentes, **caractérisée en ce que** ledit corps parallélépipédique (2) est muni extérieurement de deux ailes mutuellement opposées (6) qui font un angle vers le bas et qui sont adaptées pour buter contre ladite surface (10) de façon à stabiliser l'appui dudit corps parallélépipédique (2).
